# EUROPÄISCHE PATENTSCHRIFT

(11) **EP 1 714 990 B1**
(45) Veröffentlichungstag und Bekanntmachung des Hinweises auf die Patenterteilung: **26.11.2008**
(21) Anmeldenummer: 06007458.0
(22) Anmeldetag: 08.04.2006
(51) Int. Cl.: C08G 18/44, C08G 18/46, C08G 64/02, C08G 77/448

(54) **Beschichtungen auf Basis von niederviskosen Oligocarbonatpolyolen**
Coatings based on low viscosity oligomeric polycarbonatepolyols
Revetements contenant des oligomères de carbonatepolyols de faible viscosité

(30) Priorität: 22.04.2005 DE 102005018691
(43) Veröffentlichungstag der Anmeldung: 25.10.2006
(73) Patentinhaber: Bayer MaterialScience AG, 51368 Leverkusen (DE)
(72) Erfinder: Hofacker, Steffen, Dr., 51519 Odenthal (DE)

(56) Entgegenhaltungen:
- EP-A- 1 035 150
- WO-A-98/54242
- US-A- 5 461 121
- GUNATILLAKE P A ET AL: "SYNTHESIS AND CHARACTERIZATION OF A SERIES OF POLY(ALKYLENE CARBONATE) MACRODIOLS AND THE EFFECT OF THEIR STRUCTURE ON THE PROPERTIES OF POLYURETHANES" 22. August 1998 (1998-08-22), JOURNAL OF APPLIED POLYMER SCIENCE, JOHN WILEY AND SONS INC. NEW YORK, US, PAGE(S) 1621-1633 , XP000803565 ISSN: 0021-8995 * Seite 1626, linke Spalte - Seite 1626, rechte Spalte *

## Beschreibung

Die vorliegende Erfindung betrifft auf Basis von niederviskosen Oligocarbonatpolyolen erhältliche Beschichtungen, deren Herstellung und Verwendung.

Oligocarbonatpolyole sind wichtige Vorprodukte, beispielsweise bei der Herstellung von Kunststoffen, Lacken und Klebstoffen. Sie werden z.B. mit Isocyanaten, Epoxiden, (cyclischen) Estern, Säuren oder Säureanhydriden umgesetzt (DE-A 1 955 902). Sie können prinzipiell aus aliphatischen Polyolen durch Umsetzung mit Phosgen (z.B. DE-A 1 595 446), bis-Chlorkohlensäureestern (z.B. DE-A 857 948), Diarylcarbonaten (z.B. DE-A 1 01 2557), cyclischen Carbonaten (z.B. DE-A 2 523 352) oder Dialkylcarbonaten (z.B. WO 2003/2630) hergestellt werden.

Die im Stand der Technik beschriebenen Oligocarbonatpolyole mit einem zahlenmittleren Molekulargewicht (Mₙ) von 500 bis 5000 g/mol sind dadurch gekennzeichnet, dass sie bei Raumtemperatur (23°C) im festen Aggregatzustand oder aber in einem viskosen, flüssigen Aggregatzustand vorliegen. Dabei erstreckt sich der Viskositätsbereich von bei Raumtemperatur flüssigen Oligocarbonatpolyolen je nach Zusammensetzung und zahlenmittlerem Molekulargewicht von 2500 mPas bis 150000 mPas. Dabei werden Viskositäten von < 3500 mPas allein durch Oligocarbonatpolyole erreicht, die oftmals neben Carbonatstrukturen noch Estereinheiten und/oder zahlenmittlere Molekulargewichte ≤ 1000 g/mol aufweisen. Dies führt jedoch im Falle der Anwesenheit von Estereinheiten dazu, dass beispielsweise bei Polyurethansystemen, welche auf derartigen sog. Polyestercarbonatpolyolen basieren, die Hydrolysestabilität im Vergleich zu Systemen, welche auf reinen Oligocarbonatpolyolen basieren, negativ beeinflusst wird. Analoges gilt für den Fall der Verwendung von etherhaltigen Oligocarbonatpolyolen hinsichtlich der schlechteren UV-Beständigkeit gegenüber solchen System, die auf reinen Oligocarbonatpolyolen basieren.

Eine weitere Möglichkeit, niederviskose reine Oligocarbonatpolyole herzustellen, besteht in der Verwendung von hydroxyalkylterminierten Siliconen. Die prinzipielle Herstellung solcher Oligocarbonatdiole, die ausschließlich hydroxyalkylterminierte Siliconverbindungen als Diolkomponente aufweisen, ist bereits bekannt und in Chem. Ber. (1966), 99 (2), 1368-1383 beschrieben. Jedoch ist bei der dort genannten Herstellung durch Phosgenierung kein Hinweis darauf zu finden, dass die erhaltenen Oligomere bzw. Polymere ausschließlich hydroxyfunktionelle Endgruppen enthalten. Es zeigt sich ferner, dass derartige Oligocarbonatdiole, die allein auf hydroxyalkylterminierten Siliconverbindungen basieren, zur Herstellung von Polyurethanbeschichtungen ungeeignet sind, da sie in hohem Maße Unverträglichkeiten mit (Poly)Isocyanaten aufweisen.

Des Weiteren lehrt beispielsweise EP-A 1 035 153 die Herstellung von Carbonatgruppen enthaltenden mit Polyesterpolyolen modifizierten Polysiloxanen. Dabei handelt es sich um hydroxyalkylterminierte Silicone, welche mit Polyesterpolyolen und organischen Kohlensäureestern zu Copolymeren umgesetzt wurden. Derartige Copolymere, über deren Viskositäten keine näheren Angaben gemacht wurden, weisen aufgrund der Anwesenheit von Estergruppen hinsichtlich ihrer Hydrolysestabilität ein ähnlich negatives Verhalten wie die weiter oben beschriebenen Polyestercarbonatpolyole auf, so dass diese Copolymere meist nur als Additive in Beschichtungen Einsatz finden. Über Carbonsäureestergruppenfreie Carbonate wird nichts beschrieben.

Aus der WO 1998/054242 und dem Artikel von P.A. Guntatillake et al. in "Journal of Applied Polymer Science" vom 22.08.1998, Seiten 1621 bis 1633, sind siliconbasierte Polycarbonate, insbesondere daraus erhältliche Co-Polymere und Elastomere bekannt geworden, jedoch wird in diesen Publikationen auf deren Vorzüge in Bezug auf die mechanischen Eigenschaften abgehoben. Beschichtungen, welche auf Substrate zum Beispiel als Oberflächenschutz aufgebracht werden, sind nicht Gegenstand dieser Publikationen.

Aufgabe der vorliegenden Erfindung war es daher, Beschichtungen auf Basis von Oligocarbonatpolyolen zur Verfügung zu stellen. Dazu geeignete Oligocarbonatpolyole weisen bei Raumtemperatur (23°C) eine Viskosität gemessen nach DIN EN ISO 3219 und in Abhängigkeit eines zahlenmittleren Molekulargewichtes zwischen 500 und 10000 g/mol von kleiner 15000 mPas auf, und sie weisen die oben angeführten Nachteile nicht auf.

Es wurde gefunden, dass solche Beschichtungen die zugrunde liegende Aufgabe lösen, die unter Verwendung von aliphatischen Oligocarbonatpolyolen mit einem zahlenmittleren Molekulargewicht (Mₙ) von 500 bis 10000 g/mol, die aus einer Polyolkomponente aufgebaut sind, die 1 bis 99 mol-% bezogen auf diese Polyolkomponente Diole der Formel (I) enthalten, erhältlich sind 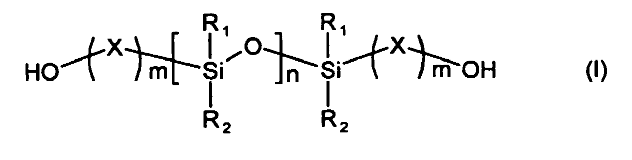 wobei
- n: eine ganze Zahl von 1 bis 50 ist,
- m: eine ganze Zahl von 1 bis 20 ist
- R₁, R₂: unabhängig voneinander ein C₁ bis C₂₀-Alkylrest, der linear, cyclisch oder verzweigt sein kann und gegebenenfalls ungesättigt ist und
- (X)ₘ: eine kohlenstoffhaltige Gruppe mit 1 - 20 C-Atomen ist, deren Kette auch durch Heteroatome wie Sauerstoff, Schwefel oder Stickstoff unterbrochen sein kann
und des Weiteren als Bestandteil mindestens ein weiteres aliphatisches Polyol aufweist, wobei sich die Mengen des Diols der Formel (I) und der weiteren enthaltenen Polyole zu 100 mol% aufaddieren.

Gegenstand der Erfindung sind somit die vorstehend beschriebenen Beschichtungen.

Bevorzugt sind solche Beschichtungen, zu deren Herstellung Diole (I) verwendet werden, in denen
- (X)ₘ: eine Alkylgruppe,
- n: eine ganze Zahl von 1 bis 20, besonders bevorzugt 1 bis 10,
- m: eine ganze Zahl von 1 bis 10, besonders bevorzugt 1 bis 5 und
- R₁, R₂: Methyl, Ethyl oder Propyl, besonders bevorzugt R₁ = R₂ = Methyl bedeutet.

Bevorzugt sind die Diole der Formel (I) in der aliphatischen Polyolkomponente zu 1 bis 90 mol-%, besonders bevorzugt 1 bis 75 mol-% enthalten.

Die Herstellung von in Formel (I) dargestellten hydroxyalkylterminierten Siliconverbindungen ist bekannt und beispielsweise in Chemie und Technologie der Silicone, 2. Auflage, 1968, Verlag Chemie, Weinheim, Deutschland beschrieben.

Ein weiterer Gegenstand der Erfindung ist die Bereitstellung der auf den vorstehend beschriebenen Oligocarbonatpolyolen basierenden erfindungsgemäßen Beschichtungen als Kleb- und Dichtstoffe sowie Polyurethanprepolymere. Bevorzugt sind polyurethanhaltige Beschichtungen, bei denen die diese Oligocarbonatpolyole als reaktive Komponente gegenüber (Poly)Isocyanaten eingesetzt werden.

Die Herstellung der erfindungsgemäß eingesetzten Oligocarbonatpolyole kann nach einem, im Stand der Technik beschriebenen Verfahren, wie z.B. der Phosgenierung oder Umesterung erfolgen.

Bevorzugt werden diese Oligocarbonatpolyole durch Umesterung von organischen Carbonaten wie z.B. Aryl-, Alkyl- oder Alkylencarbonate, die durch ihre einfache Herstellbarkeit und gute Verfügbarkeit bekannt sind, mit einer Polyolkomponente hergestellt. Als Beispiele seien genannt: Diphenylcarbonat (DPC), Dimethylcarbonat (DMC), Diethylcarbonat (DEC), Ethylencarbonat, etc.

Neben den Diolen gemäß Formel (I) werden in der Polyolkomponente aliphatische Alkohole mit 2 bis 100 C-Atomen und einer OH-Funktionalität ≥ 2 eingesetzt. Diese Alkohole können linear, cyclisch, verzweigt, unverzweigt, gesättigt oder ungesättigt sein und die OH-Funktionen können an primären, sekundären oder tertiären C-Atomen gebunden sein.

Als Beispiele seien genannt: Ethylenglykol, 1,3-Propylenglykol, 1,3-Butandiol, 1,4-Butandiol, 1,5-Pentandiol, 1,6-Hexandiol, 2-Ethyl-Hexandiol, 3-Methyl-1,5-Pentandiol, Cylohexandimethanol, Trimethylolpropan, Pentaerythrit, Dimerdiol, Sorbit.

Ferner können auch beliebige Mischungen der vorstehend genannten aliphatischen Polyole neben den Verbindungen der Formel (I) in der zur Umesterung eingesetzten Polyolkomponente enthalten sein.

Bevorzugte aliphatische Polyole sind gesättigte aliphatische oder cycloaliphatische Polyole, die gegebenenfalls verzweigt sind und primär oder sekundär gebundene OH-Gruppen und eine OH-Funktionalität ≥ 2 aufweisen.

Zur Beschleunigung der Umsetzung der organischen Carbonate mit den erfindungsgemäß einzusetzenden Polyolen können prinzipiell alle aus dem Stand der Technik bekannten Umesterungskatalysatoren eingesetzt werden. Möglich sind dabei sowohl lösliche Katalysatoren (homogene Katalyse) wie auch heterogene Umesterungskatalysatoren.

Insbesondere eigenen sich für die Herstellung der erfindungsgemäßen Oligocarbonatpolyole Hydroxide, Oxide, Metallalkoholate, Carbonate und metallorganische Verbindungen der I., II., III. und IV. Hauptgruppe des Periodensystems der Elemente nach Mendelejew, der III. und IV. Nebengruppe sowie die Elemente und Verbindungen aus der Gruppe der Selten Erd Metalle, insbesondere die Verbindungen des Titans, Zirkoniums, Bleis, Zinns, Antimons, Yttriums und Ytterbiums.

Zum Beispiel seien genannt: LiOH, Li₂CO₃, K₂CO₃, CaO, TiCl₄, Ti(OⁱPr)₄, Ti(OⁱBu)₄, Zr(OⁱPr)₄, Zinnoctoat, Dibutylzinndilaurat, Bis-tributylzinnoxid, Zinnoxalat, Bleistearat, Sb₂O₃, Yttrium(III)-acetylacetonat, Ytterbium(III)acetylacetonat.

Bevorzugt werden Alkoholat-Verbindungen des Titans und/oder Zirkoniums wie z.B. Ti(OⁱPr)₄, Ti(OⁱBu)₄, Zr(OⁱPr)₄, Zinn-organische Verbindungen wie Dibutylzinndilaurat, Bistributylzinnoxid, Dibutylzinnoxid, sowie Acetylacetonat-Verbindungen der Seltenerdmetalle wie Yttrium(III)-acetylacetonat und/oder Ytterbium(III)acetylacetonat eingesetzt. Ganz besonders bevorzugt werden Yttrium(III)acetylacetonat, Ytterbium(III)acetylacetonat und/oder Titantetraisopropylat eingesetzt.

Der Katalystorgehalt beträgt 1 bis 1000 ppm, bevorzugt 1 bis 500 ppm, besonders bevorzugt 1 bis 250 ppm bezogen auf die Menge des resultierenden erfindungsgemäß einzusetzenden Oligocarbonates.

Der Katalysator kann nach Abschluss der Reaktion im Produkt belassen, abgetrennt, neutralisiert und/oder maskiert werden. Vorzugsweise wird der Katalysator im Produkt belassen. Im Falle einer Maskierung werden vorzugsweise Phosphorsäure und deren Derivate wie z.B. H₃PO₄, Dibutylphosphat, etc. als Maskierungsmittel verwendet.

Zur Herstellung von erfindungsgemäßen, auf diesen Oligocarbonatpolyolen basierenden Polyurethanbeschichtungen können alle aus dem Stand der Technik bekannten (Poly)Isocyanate, als gegenüber Hydroxylgruppen reaktiven Komponenten verwendet werden.

Bei den gegenüber Hydroxylgruppen reaktiven Polyisocyanaten handelt es sich um beliebige, durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200, den Schriften DE-A 16 70 666, 19 54 093, 24 14 413, 24 52 532, 26 41 380, 37 00 209, 39 00 053 und 39 28 503 oder den EP-A 336 205, 339 396 und 798 299 beispielhaft beschrieben sind.

Geeignete Diisocyanate zur Herstellung solcher Polyisocyanate sind beliebige durch Phosgenierung oder nach phosgenfreien Verfahren, beispielsweise durch thermische Urethanspaltung, zugängliche Diisocyanate des Molekulargewichtsbereichs 140 bis 400 mit aliphatisch, cycloaliphatisch, araliphatisch und/oder aromatisch gebundenen Isocyanatgruppen, wie z.B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Iso-cyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan (MDI), 1,5-Diisocyanatonaphthalin oder beliebige Gemische solcher Diisocyanate.

Bevorzugt handelt es sich um Polyisocyanate oder Polyisocyanatgemische der genannten Art mit ausschließlich aliphatisch und/oder cycloaliphatisch gebundenen Isocyanatgruppen.

Ganz besonders bevorzugt sind Polyisocyanate bzw. Polyisocyanatgemische mit Isocyanuratstruktur auf Basis von HDI, IPDI und/oder 4,4'-Diisocyanatodicyclohexylmethan.

Ferner ist es ebenso möglich so genannte blockierte Polyisocyanate und/oder Isocyanate, bevorzugt blockierte Polyisocyanate bzw. Polyisocyanatgemische, ganz besonders bevorzugt blockierte Polyisocyanate bzw. Polyisocyanatgemische mit Isocyanuratstruktur auf Basis von HDI, IPDI und/oder 4,4'-Diisocyanatodicyclohexylmethan einzusetzen.

Die Blockierung von (Poly)Isocyanaten zum zeitweisen Schutz der Isocyanatgruppen ist eine seit langem bekannte Arbeitsmethode und wird z.B. in Houben Weyl, Methoden der organischen Chemie XIV/2, S. 61-70 beschrieben.

Als Blockierungsmittel kommen z.B. alle Verbindungen in Betracht, die bei Erhitzen des blockierten (Poly)Isocyanats ggf. unter Anwesenheit eines Katalysators abgespalten werden können. Geeignete Blockierungsmittel sind z.B. sterisch anspruchsvolle Amine wie Dicyclohexylamin, Diisopropylamin, N-tert-butyl-N-benzylamin, Caprolactam, Butanonoxim, Imidazole mit den verschiedenen denkbaren Substitutionsmustern, Pyrazole wie 3,5-Dimethylpyrazol, Triazole und Tetrazole, ebenso Alkohole wie Isopropanol, Ethanol. Daneben besteht auch die Möglichkeit, die Isocyanatgruppe so zu blockieren, dass bei einer Weiterreaktion nicht das Blockierungsmittel abgespalten wird, sondern die intermediär gebildete Zwischenstufe abreagiert. Dies ist insbesondere beim Cyclopentanon-2-carboxyethylester der Fall, der bei der thermischen Vernetzungsreaktion vollständig in das polymere Netzwerk einreagiert und nicht wieder abgespalten wird.

Als Katalysatoren für die Reaktion der erfindungsgemäß einzusetzenden Oligocarbonatpolyole und der oben beschriebenen (Poly)Isocyanat-Komponente können Katalysatoren wie handelsübliche Organometallverbindungen der Elemente Aluminium, Zinn, Zink, Titan, Mangan, Eisen, Bismut oder auch Zirkonium wie z.B. Dibutylzinndilaurat, Zinkoctoat, Titantetraisopropylat verwendet werden. Darüber hinaus eignen sich aber auch tertiäre Amine wie z.B. 1,4-Diazabicyclo-[2.2.2]-octan.

Ferner ist es möglich die Umsetzung der erfindungsgemäß einzusetzenden Oligocarbonatpolyole mit der (Poly)Isocyanat-Komponente zu beschleunigen, in dem diese bei Temperaturen zwischen 20 und 200°C, bevorzugt zwischen 40 und 180°C, durchgeführt wird.

Neben der alleinigen Verwendung der erfindungsgemäß einzusetzenden Oligocarbonatpolyole können auch Mischungen aus diesen Oligocarbonatpolyolen und weiteren gegenüber (Poly)Isocyanat reaktiven Verbindungen wie z.B. Polyetherpolyolen, Polyesterpolyolen, Polyacrylatpolyen, Polyaminen, Aspartaten, etc. verwendet werden.

Das Verhältnis von (Poly)Isocyanat-Komponente zur Komponente, die gegenüber der Isocyanatgruppe reaktiv ist, wird dabei so bemessen, dass ein Äquivalentverhältnis der freien und gegebenenfalls blockierten NCO-Gruppen zu der gegenüber der Isocyanatgruppe reaktiven Komponente von 0,3 bis 2, bevorzugt 0,4 bis 1,5, besonders bevorzugt 0,5 bis 1,2 resultiert.

Zusätzlich können die erfindungsgemäßen Polyurethanbeschichtungen, die in der Beschichtungstechnologie üblichen Hilfsstoffe, wie anorganische oder organische Pigmente, weitere organische Lichtschutzmittel, Radikalfänger, Lackadditive, wie Dispergier-, Verlauf-, Verdickungs-, Entschäumungs- und andere Hilfsmittel, Haftmittel, Fungizide, Bakterizide, Stabilisatoren oder Inhibitoren und weitere Katalysatoren enthalten.

Derartige erfindungsgemäße Beschichtungsmittel können beispielweise Anwendung in den Bereichen Kunstofflackierung, Automobil-Innen-/Außenlackierung, Boden-, Balkonbeschichtung und/oder Holz-/Möbellackierung finden.

### Beispiele

Die Bestimmung der Hydroxylzahl (OHZ) erfolgte gemäß DIN 53240-2.

Das zahlenmittlere Molekulargewicht (Mₙ) ergibt sich rechnerisch aus der dem Fachmann bekannten Beziehung zwischen Hydroxylzahl und theroretischer Hydroxyl-Funktionalität.

Die Viskositätsbestimmung erfolgte mittels Rotationsviskosimeter "RotoViscol" der Fa. Haake, Deutschland gemäß DIN EN ISO 3219.

Wenn nichts anderes aufgeführt, beziehen sich die angegebenen Temperaturangaben in den nachfolgenden Beispielen jeweils auf die Sumpftemperatur des Reaktionsgemisches.

### Beispiel 1

### Herstellung eines erfindungsgemäß einzusetzenden Oligocarbonatpolyols

In einem 1 1 Dreihalskolben mit Rührer und Rückflusskühler wurden 139,5 g (75 mol-%) 1,6-Hexandiol und 223,0 g (25 mol-%) Baysilone® OF/OH 502 6 % (GE-Bayer Silicones, Deutschland) unter Stickstoffatmosphäre vorgelegt und bei 110°C und 20 mbar Druck 2 h entwässert. Bei Baysilone^{®} OF/OH 502 6% handelt es sich um ein hydroxyalkyl-funktionelles (α, ω-Carbinol) Polydimethylsiloxan. Danach wurde mit Stickstoff belüftet und 0,008 g Titantetraisopropylat sowie 194,7 g Dimethylcarbonat zugegeben und die Reaktionsmischung 24 h unter Rückfluss (110°C Ölbadtemperatur) gehalten. Anschließend wurde der Rückflusskühler gegen eine Claisenbrücke ausgetauscht und das entstandene Spaltprodukt Methanol sowie noch vorhandenes Dimethylcarbonat abdestilliert. Dazu wurde die Temperatur von 110°C innerhalb von 2 h auf 150°C erhöht und nach Erreichen der Temperatur 4 h gehalten. Daran anschließend wurde die Temperatur innerhalb von 2 h auf 180°C erhöht und nach Erreichen weitere 4 h gehalten. Danach wurde das Reaktionsgemisch auf 100°C abgekühlt und ein Stickstoffstrom (2 l/h) in das Reaktionsgemisch eingeleitet. Weiterhin wurde der Druck auf 20 mbar stufenweise abgesenkt, so dass die Kopftemperatur während der fortlaufenden Destillation 60°C nicht überstieg. Nach Erreichen der 20 mbar wurde die Temperatur auf 130°C erhöht und dort 6 h gehalten. Nach Belüftung und Abkühlung erhielt man ein bei Raumtemperatur flüssiges Oligocarbonatdiol mit folgenden Kennzahlen:

| | |
|---|---|
| Hydroxylzahl (OHZ): | 36,9 mg KOH / g |
| Viskosität bei 23 °C, D:16: | 1450 mPas |
| zahlenmittleres Molekulargewicht (Mₙ): | 3035 g/mol |

### Vergleichsbeispiel 1

Herstellung eines bei Raumtemperatur flüssigen Oligocarbonatesterpolyols

In einem 2 1 Dreihalskolben mit Rührer und Rückflusskühler wurden 461,4 g (50 mol-%) 1,6-Hexandiol unter Stickstoffatmosphäre vorgelegt und bei 110°C und 20 mbar Druck 2 h entwässert. Danach wurde mit Stickstoff belüftet und bei 60°C 0,08 g Titantetraisopropylat sowie 446,6 g (50 mol-%) ε-Caprolacton zugegeben auf 80°C aufgeheizt und dort 2 h gehalten. Danach wurden 482,4 g Dimethylcarbonat zugegeben und die Reaktionsmischung 24 h unter Rückfluss (110°C Ölbadtemperatur) gehalten. Anschließend wurde der Rückflusskühler gegen eine Claisenbrücke ausgetauscht und das entstandene Spaltprodukt Methanol sowie noch vorhandenes Dimethylcarbonat abdestilliert. Dazu wurde die Temperatur von 110°C innerhalb von 2 h auf 150°C erhöht und nach Erreichen der Temperatur 4 h gehalten. Daran anschließend wurde die Temperatur innerhalb von 2 h auf 180°C erhöht und nach Erreichen weitere 4 h gehalten. Danach wurde das Reaktionsgemisch auf 150°C abgekühlt und ein Stickstoffstrom (2 l/h) in das Reaktionsgemisch eingeleitet. Weiterhin wurde der Druck auf 20 mbar stufenweise abgesenkt, so dass die Kopftemperatur während der fortlaufenden Destillation 60°C nicht überstieg. Nach Erreichen der 20 mbar wurde die Temperatur auf 180°C erhöht und dort 6 h gehalten. Nach Belüftung und Abkühlung erhielt man ein bei Raumtemperatur flüssiges Oligocarbonatdiol mit folgenden Kennzahlen:

| | |
|---|---|
| Hydroxylzahl (OHZ): | 34,8 mg KOH / g |
| Viskosität bei 23°C, D:16: | 78300 mPas |
| zahlenmittleres Molekulargewicht (Mn): | 3218 g/mol |

### Vergleichsbeispiel 2

### Herstellung eines bei Raumtemperatur flüssigen Oligocarbonatetherpolyols

In einem 5 1 Dreihalkolben mit Rührer und Rückflusskühler wurden 2788,6 g (100 mol-%) Poly-THF^{®} 250 (BASF AG, Deutschland) unter Stickstoffatmosphäre vorgelegt und bei 110°C und 20 mbar Druck 2 h entwässert. Danach wurde mit Stickstoff belüftet und 0,6 g Ytterbium(III)acetylacetonat sowie 1098,5 g Dimethylcarbonat zugegeben und die Reaktionsmischung 24 h unter Rückfluss (110°C Ölbadtemperatur) gehalten. Anschließend wurde der Rückflusskühler gegen eine Claisenbrücke ausgetauscht und das entstandene Spaltprodukt Methanol sowie noch vorhandenes Dimethylcarbonat abdestilliert. Dazu wurde die Temperatur von 110°C innerhalb von 2 h auf 150°C erhöht und nach Erreichen der Temperatur 4 h gehalten. Daran anschließend wurde die Temperatur innerhalb von 2 h auf 180°C erhöht und nach Erreichen weitere 4 h gehalten. Danach wurde das Reaktionsgemisch auf 130°C abgekühlt und ein Stickstoffstrom (2 l/h) in das Reaktionsgemisch eingeleitet. Weiterhin wurde der Druck auf 20 mbar stufenweise abgesenkt, so dass die Kopftemperatur während der fortlaufenden Destillation 60°C nicht überstieg. Nach Erreichen der 20 mbar wurde die Temperatur auf 180°C erhöht und dort 6 h gehalten. Nach Belüftung und Abkühlung erhielt man ein bei Raumtemperatur flüssiges Oligocarbonatdiol mit folgenden Kennzahlen:

| | |
|---|---|
| Hydroxylzahl (OHZ): | 35,4 mg KOH / g |
| Viskosität bei 23°C , D:16: | 17800 mPas |
| zahlenmittleres Molekulargewicht (Mn): | 3160 g/mol |

### Vergleichsbeispiel 3

### Herstellung eines reinen Oligocarbonatpolyols

Gleiches Vorgehen wie in Vergleichsbeispiel 2 mit dem Unterschied, dass anstatt Poly-THF^{®} 250 2149,6 g (100 mol-%) 1,6-Hexandiol sowie 2340,6 g Dimethylcarbonat und 0,52 g Ytterbium(III)-acetylacetonat als Edukte eingesetzt wurden. Nach Belüftung und Abkühlung erhielt man ein bei Raumtemperatur wachsartiges Oligocarbonatdiol mit folgenden Kennzahlen:

| | |
|---|---|
| Hydroxylzahl (OHZ): | 39,8 mg KOH / g |
| Viskosität bei 23°C, D:16: | nicht bestimmbar, da wachsartig fest |
| zahlenmittleres Molekulargewicht (Mn): | 2800 g/mol |

### Vergleichsbeispiel 4

### Herstellung eines flüssigen, reinen Oligocarbonatpolyols

Gleiches Vorgehen wie in Vergleichsbeispiel 2 mit dem Unterschied, dass anstatt Poly-THF^{®} 250 1909,8 g (100 mol-%) 3-Methyl-1,5-Pentandiol sowie 2027,8 g Dimethylcarbonat und 0,46 g Ytterbium(III)acetylacetonat als Edukte eingesetzt wurden. Nach Belüftung und Abkühlung erhielt man ein bei Raumtemperatur zähflüssiges Oligocarbonatdiol mit folgenden Kennzahlen:

| | |
|---|---|
| Hydroxylzahl (OHZ): | 56,2 mg KOH / g |
| Viskosität bei 23°C , D:16: | 72000 mPas |
| zahlenmittleres Molekulargewicht (Mn): | 2000 g/mol |

### Vergleichsbeispiel 5

### Herstellung eines niederviskosen, reinen Oligocarbonatpolyols

Gleiches Vorgehen wie in Vergleichsbeispiel 2 mit dem Unterschied, dass in einem 1 1 Dreihalskolben anstatt Poly-THF^{®} 250 251,8 g (100 mol-%) Baysilone^{®} OF/OH 502 6% (GE-Bayer Silicones, Deutschland) sowie 42,5 g Dimethylcarbonat und 0,05 g Ytterbium(III)acetylacetonat als Edukte eingesetzt wurden. Nach Belüftung und Abkühlung erhielt man ein bei Raumtemperatur flüssiges, niederviskoses Oligocarbonatdiol mit folgenden Kennzahlen:

| | |
|---|---|
| Hydroxylzahl (OHZ): | 58,5 mg KOH / g |
| Viskosität bei 23°C , D:16: | 17 mPas |
| zahlenmittleres Molekulargewicht (Mn): | 1900 g/mol |

### Beispiel 2: Herstellung einer erfindungsgemäßen Polyurethanbeschichtung

Das in Beispiel 1 hergestellte Oligocarbonatdiol wurde mit Desmodur^{®} Z 4470 (Polyisocyanat auf Basis von IPDI, Bayer MaterialScience AG, Leverkusen, Deutschland) im Äquivalenzverhältnis 1:1,1 unter weiterem Zusatz von 50 ppm Dibutylzinndilaurat in einem Becherglas gemischt und anschließend die homogene Mischung auf eine Glasplatte mittels Rakel aufgebracht. Danach wurde die Beschichtung 30 Minuten bei 140°C ausgehärtet. Es wurde ein klarer, hochtransparenter Polyurethanfilm erhalten.

### Vergleichsbeispiel 6:

### Herstellung einer Polyurethanbeschichtung

Gleiches Vorgehen wie in Beispiel 2 mit dem Unterschied, dass als Oligocarbonatdiol, jenes in Vergleichsbeispiel 5 hergestellte eingesetzt wurde. Die erhaltene Mischung war trübe und wies Phasenseparation auf. Die Herstellung einer Polyurethanbeschichtung war nicht möglich.

Wie aus dem Vergleich von Beispiel 1 zu den Vergleichbeispielen 1 bis 4 hervorgeht, weist das erfindungsgemäß einzusetzende Oligocarbonatpolyol eine deutlich niedrigere Viskosität bei gleichem oder sogar höherem Molekulargewicht auf, ohne die Nachteile einer Ester- oder Etherstruktur zu beinhalten.

Ferner zeigt der Vergleich von Beispiel 2 und Vergleichbeispiel 6 auf, dass nur mit dem erfindungsgemäß einzusetzenden Oligocarbonatpolyol Polyurethane bzw. Polyurethanbeschichtungen herstellbar sind.

## Patentansprüche

1. Beschichtungen erhältlich unter Verwendung von aliphatischen Oligocarbonatpolyolen mit einem zahlenmittleren Molekulargewicht (Mₙ) von 500 bis 10000 g/mol, die aus einer Polyolkomponente aufgebaut sind, die 1 bis 99 mol-% bezogen auf diese Polyolkomponente Diole der Formel (I) enthält 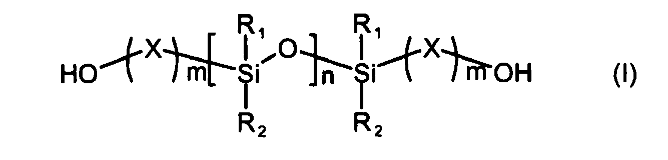 wobei
n eine ganze Zahl von 1 bis 50 ist,
m eine ganze Zahl von 1 bis 20 ist,
R₁, R₂ unabhängig voneinander ein C₁ bis C₂₀-Alkylrest, der linear, cyclisch oder verzweigt sein kann und gegebenenfalls ungesättigt ist und
(X)ₘ eine kohlenstoffhaltige Gruppe mit 1 - 20 C-Atomen ist, deren Kette auch durch Heteroatome wie Sauerstoff, Schwefel oder Stickstoff unterbrochen sein kann
und des Weiteren als Bestandteil mindestens ein weiteres aliphatisches Polyol aufweist, wobei sich die Mengen des Diols der Formel (I) und der weiteren enthaltenen Polyole zu 100 mol% aufaddieren.

2. Beschichtungen gemäß Anspruch 1, **dadurch gekennzeichnet, dass** es sich um Polyurethanbeschichtungen handelt.

3. Beschichtungen gemäß Anspruch 1 oder 2, **dadurch gekennzeichnet, dass** bei deren Herstellung Isocyanate oder Polyisocyanate, als gegenüber Hydroxylgruppen reaktive Komponente eingesetzt werden.

4. Beschichtungen gemäß Anspruch 3, **dadurch gekennzeichnet, dass** es sich bei den Polyisocyanaten um beliebige, durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Allophanat-, Biuret-, Iminooxadiazindion- und/oder Oxadiazintrionstruktur handelt.

5. Beschichtungen gemäß Anspruch 3 oder 4, **dadurch gekennzeichnet, dass** als Polyisocyanate Polyisocyanate bzw. Polyisocyanatgemische mit Isocyanuratstruktur auf Basis von HDI, IPDI und/oder 4,4'-Diisocyanatodicyclohexylmethan eingesetzt werden.

6. Beschichtungen gemäß einem der Ansprüche 3 bis 5, **dadurch gekennzeichnet, dass** die Polyisocyanate bzw. Polyisocyanatgemische blockiert sind.

7. Beschichtungen gemäß einem der Ansprüche 1 bis 6, **dadurch gekennzeichnet, dass** bei deren Herstellung Katalysatoren mit verwendet werden.

8. Beschichtungen gemäß einem der Ansprüche 1 bis 7, **dadurch gekennzeichnet, dass** bei deren Herstellung weitere gegenüber Polyisocyanaten reaktive Verbindungen ausgewählt aus der Gruppe bestehend aus Polyetherpolyolen, Polyesterpolyolen, Polyacrylatpolyen, Polyaminen und Aspartaten mitverwendet werden.

9. Beschichtungen gemäß einem der Ansprüche 1 bis 8, **dadurch gekennzeichnet, dass** bei deren Herstellung das Äquivalentverhältnis von NCO zu OH-Gruppen 0,3 bis 2 beträgt.

10. Beschichtungen gemäß einem der Ansprüche 1 bis 9, **dadurch gekennzeichnet, dass** bei deren Herstellung die Aushärtung bei 20 bis 200°C erfolgt.

## Claims

1. Coatings obtainable using aliphatic oligocarbonate polyols which have a number-average molecular weight (Mₙ) of from 500 to 10,000 g/mol and are composed of a polyol component which contains from 1 to 99 mol%, based on the polyol component, of diols of formula (I) 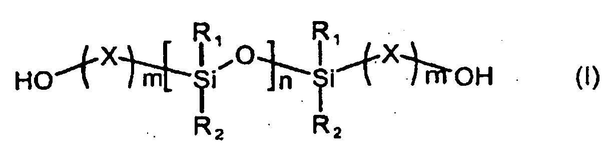 wherein
n is an integer from 1 to 50,
m is an integer from 1 to 20,
R₁, R₂, each independently of the other, is a C₁-to C₂₀-alkyl radical which can be linear, cyclic or branched and is optionally unsaturated, and
(X)ₘ is a carbon-containing group having from 1 to 20 carbon atoms whose chain can also be interrupted by heteroatoms such as oxygen, sulfur or nitrogen,
and which further contains at least one further aliphatic polyol as a constituent, wherein the sum of the amounts of the diol of formula (I) and of the further polyols that are present is 100 mol%.

2. Coatings according to claim 1, **characterised in that** they are polyurethane coatings.

3. Coatings according to claim 1 or 2, **characterised in that** isocyanates or polyisocyanates are used in their preparation as a component that is reactive towards hydroxyl groups.

4. Coatings according to claim 3, **characterised in that** the polyisocyanates are any desired polyisocyanates having a uretdione, isocyanurate, allophanate, biuret, iminooxadiazinedione and/or oxadiazinetrione structure that are composed of at least two diisocyanates and have been prepared by modification of simple aliphatic, cycloaliphatic, araliphatic and/or aromatic diisocyanates.

5. Coatings according to claim 3 or 4, **characterised in that** the polyisocyanates used are polyisocyanates or polyisocyanate mixtures having an isocyanurate structure based on HDI, IPDI and/or 4,4'-diisocyanatodicyclohexylmethane.

6. Coatings according to any one of claims 3 to 5, **characterised in that** the polyisocyanates or polyisocyanate mixtures are blocked.

7. Coatings according to any one of claims 1 to 6, **characterised in that** catalysts are used concomitantly in their preparation.

8. Coatings according to any one of claims 1 to 7, **characterised in that** there are used concomitantly in their preparation further compounds that are reactive towards isocyanates, selected from the group consisting of polyether polyols, polyester polyols, polyacrylate polyols, polyamines and aspartates.

9. Coatings according to any one of claims 1 to 8, **characterised in that** the equivalent ratio of NCO to OH groups in their preparation is from 0.3 to 2.

10. Coatings according to any one of claims 1 to 9, **characterised in that** in their preparation curing is carried out at from 20 to 200°C.

## Revendications

1. Revêtements pouvant être obtenus en utilisant des oligocarbonate polyols aliphatiques ayant une masse moléculaire moyenne en nombre (Mₙ) de 500 à 1 000 g/mol, lesquels sont constitués d'un composant polyol contenant 1 à 99 % en mol, rapportés à ce composant polyol, de diols de formule (I) 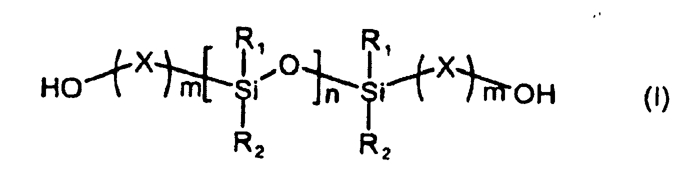 dans laquelle
n est un nombre entier de 1 à 50,
m est un nombre entier de 1 à 20,
R₁, R₂, indépendamment l'un de l'autre sont un radical alkyle en C₁ à C₂₀ qui peut être linéaire, cyclique ou ramifié et le cas échéant insaturé et
(X)ₘ est un groupe contenant des atomes de carbone comportant 1 à 20 atomes de carbone, dont la chaîne peut également être interrompue par un hétéroatome tel que l'oxygène, le soufre ou l'azote
et le reste en tant que constituant présente au moins un autre groupe polyol aliphatique, les quantités des diols de formule (I) et des autres polyols obtenus étant additionnées pour obtenir 100 % en mol.

2. Revêtements selon la revendication 1, **caractérisés en ce que** ce sont des revêtements en poly(uréthane).

3. Revêtements selon la revendication 1 ou 2, **caractérisés en ce que** des isocyanates ou des poly(isocyanates) sont utilisés lors de leur préparation en tant que composants réactifs vis-à-vis des groupes hydroxyle.

4. Revêtements selon la revendication 3, **caractérisés en ce que** les poly(isocyanates), de préférence préparés par modification de diisocyanates aliphatiques, cycloaliphatiques, araliphatiques et/ou aromatiques simples, sont au moins des poly(isocyanates) construits à partir d'au moins deux diisocyanates ayant une structure uretdione, isocyanurate, allophanate, buiret, iminooxadiazindione et/ou oxadiazintrione.

5. Revêtements selon la revendication 3 ou 4, **caractérisés en ce que** l'on utilise, en tant que poly(isocyanates), des poly(isocyanates) respectivement un mélange de poly(isocyanates) ayant une structure isocyanurate à base de HDI, IPDI et/ou 4,4'-diisocyanatodicyclohexylméthane.

6. Revêtements selon l'une quelconque des revendications 3 à 5, **caractérisés en ce que** les poly(isocyanates) respectivement un mélange de poly(isocyanates) sont bloqués.

7. Revêtements selon l'une quelconque des revendications 1 à 6, **caractérisés en ce que** l'on utilise des catalyseurs pour leur préparation.

8. Revêtements selon l'une quelconque des revendications 1 à 7, **caractérisés en ce que** l'on utilise, pour leur préparation, d'autres composés réactifs vis-à-vis des poly(isocyanates) choisis dans le groupe constitué des poly(éther)polyols, des poly(ester)polyols, des poly(acrylate)poly(ènes), des poly(amines) et des aspartates.

9. Revêtements selon l'une quelconque des revendications 1 à 8, **caractérisés en ce que**, lors de leur préparation, le rapport d'équivalent des groupes NCO aux groupes OH est de 0,3 à 2.

10. Revêtements selon l'une quelconque des revendications 1 à 9, **caractérisés en ce que**, lors de leur préparation, le vieillissement est effectué à 20 à 200 °C.
